# EUROPEAN PATENT APPLICATION

(11) **EP 4 670 485 A1**
(43) Date of publication of application: **31.12.2025**
(21) Application number: 25169360.2
(22) Date of filing: 09.04.2025
(51) Int. Cl.: A01D 41/127, A01D 41/14, A01D 57/04

(54) **SYSTEM AND METHOD FOR CONTROLLING HEIGHT OF A HARVESTING MACHINE HEADER REEL**

(30) Priority: 28.06.2024 US 202463665351 P
(71) Applicant: AGCO International GmbH, 8212 Neuhausen am Rheinfall (CH)
(72) Inventor: KOCH, Jared, Hesston, 67062 (US); NARYAL, Manish, Hesston (US)
(74) Representative: AGCO Intellectual Property Department

(57) **Abstract**

A reel height control system implemented on a combine harvester or other agricultural machine having a rotatable reel includes one or more sensors for sensing a crop to be harvested and generating corresponding sensor signals; machine controls for raising or lowering the reel; and a processing unit for receiving the sensor signals from the sensors, determining a height of the crop based on the sensor signals, and controlling the machine controls to position the reel to follow the height of the crop.

## Description

### BACKGROUND OF THE INVENTION

Self-propelled combine harvesters and other agricultural machines harvest a wide range of crops including wheat, corn, soybeans, and oats. Typically, a combine harvester cuts crop material from a field, threshes the grain therefrom, separates the grain from the straw, cleans the grain, stores the grain in an on-board tank, and ejects straw and crop residue back into the field.

The front end of a combine harvester includes a header that consists of a cutting mechanism, a reel, and an auger that together cut and gather crop. The cutting mechanism, often a sickle bar or a disc cutter, slices through the crop at the desired height. The reel has a plurality of rotating tines or fingers to guide the standing crop towards the cutter, while the auger conveys the cut crop to a threshing mechanism.

The header is often equipped with a height control system to adjust its cutting height to account for elevation changes in the ground surface on which the harvester travels. Similarly, the reel may be equipped with a height control system to adjust its height relative to the rest of the header to properly feed the crop into the header. Although header and reel height control systems can be adjusted manually or automatically, current adjustment methods often don't optimize reel height to maximize crop yield and minimize losses.

### SUMMARY OF THE INVENTION

Embodiments of the current invention address one or more of the above-mentioned problems and provide a distinct advance in the art of reel height control systems for combine harvesters and other agricultural machines. More particularly, embodiments of the invention provide more effective methods and systems for controlling the height of a harvester reel to maximize crop yield and minimize losses.

Header height control systems are designed to position their headers a particular distance above ground surfaces so as to follow the bumps, ridges, and other contours of the ground surfaces. This allows harvesters to consistently cut crops at a selected distance above the ground. Operators typically have no problems properly operating header height control systems.

However, unlike header height control systems, reel height control systems are often operated in ineffective ways. Applicant has discovered that most operators set the height of reels to be a predetermined distance above their associated headers. Thus, as a header is raised or lowered to follow contours of a ground surface, the associated reel is raised or lowered the same amount.

Applicant has discovered that reel height should be adjusted in accordance with the height of the crop to be harvested, not the contours of ground surfaces, for best performance. If a reel is positioned too high or low relative to the height of a crop canopy, the reel may not effectively guide the crop into the header and/or some of the crop may get caught in the reel. Because crop canopy height is often variable across a field, setting a reel height control system to position its reel a predetermined distance above its header (and therefore the ground) doesn't optimally position the reel to follow the crop canopy height.

The present invention solves these problems and related problems by providing a system and method for controlling the height of a harvester reel in accordance with crop canopy height. One embodiment of the invention is a reel height control system that may be implemented on a combine harvester or other agricultural machine having a rotatable reel. The reel height control system broadly comprises one or more sensors for sensing a height of crop to be harvested by the agricultural machine and generating corresponding sensor signals; machine controls for raising or lowering the reel; and a processing unit for receiving the sensor signals from the sensor, determining a height of the crop in front of the agricultural machine based on the sensor signals, and directing the machine controls to position the reel to follow the height of the crop.

The sensors may employ any sensor technologies that can sense crop canopy height in front of the combine harvester and may include ultrasound sensors, lidar sensors, radar sensors, contact sensors, or combinations of these sensors. The machine controls may include actuators, motors, pumps, and associated equipment operable to raise or lower the reel relative to the other components of the header. The processing unit may be a standalone logic device or part of other electronic control units on the harvester.

In some embodiments, the reel height control system is configured for use with a combine harvester having several independently movable reel sections. In these embodiments, the sensors and processing unit detect copy canopy height in front of each reel section, and the processing unit and machine controls independently position each reel section to follow the crop height directly in front of it.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the current invention will be apparent from the following detailed description of the embodiments and the accompanying drawing figures.

### BRIEF DESCRIPTION OF DRAWING FIGURES

Embodiments of the current invention are described in detail below with reference to the attached drawing figures, wherein:
Fig. 1 is front perspective view of an exemplary combine harvester on which embodiments of the present invention may be implemented.
Fig. 2 is a fragmentary perspective view of a header of the combine harvester.
Fig. 3 is a front elevational view of the header.
Fig. 4 is a fragmentary side view of the header.
Fig. 5 is a block diagram of selected components of a reel height control system in accordance with embodiments of the invention.
Fig. 6 is a block diagram of an exemplary controller used in the reel height control system of Fig. 5.
Fig. 7 is flow diagram that illustrates selected steps in computer-implemented methods of the present invention and/or portions of computer programs of the invention.

The drawing figures do not limit the current invention to the specific embodiments disclosed and described herein. The drawings are not necessarily to scale, emphasis instead being placed upon clearly illustrating the principles of the invention.

### DESCRIPTION OF THE INVENTION

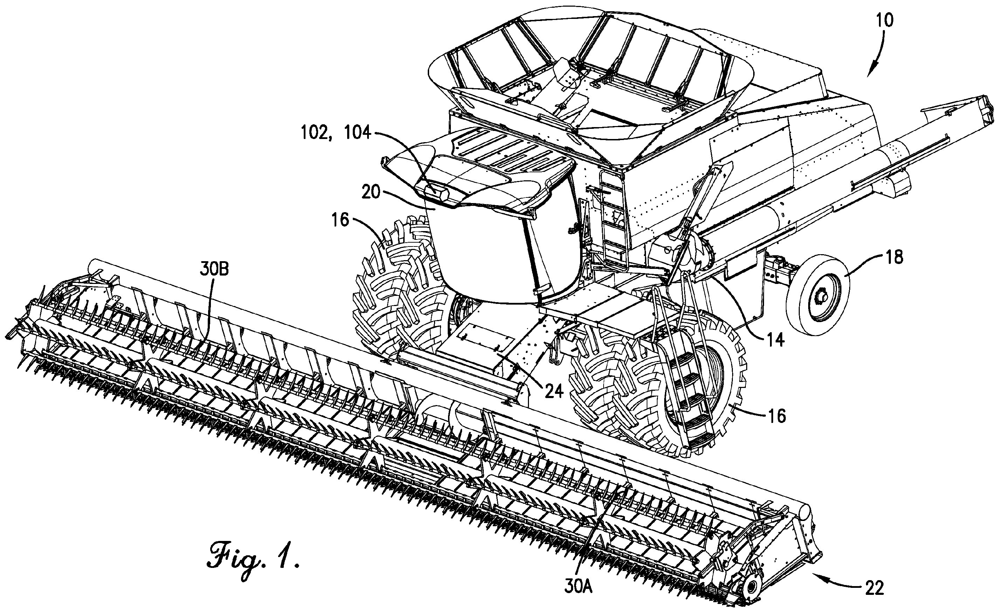

The present invention provides reel height control systems and methods that position the reel of an agricultural machine to follow the height of crop being harvested by the machine. Referring to Fig. 1, an exemplary agricultural machine 10 on which certain embodiments of the invention may be implemented is illustrated. The illustrated machine 10 is a combine harvester, but embodiments of the invention may be used with other agricultural machines or configurations of machines, including windrowers, tractors, and balers without departing from the scope of the invention.

The exemplary combine harvester 10 includes a chassis or frame 14 supported by a pair of front drive wheels 16 and a pair of rear wheels 18. In some embodiments, the wheels may be replaced with tracks. In some embodiments, the frame 14 supports a cab 20, within which an operator may control operation of the combine harvester 10. In other embodiments, the harvester may be remotely or autonomously controlled without an onboard operator.

The exemplary combine harvester 10 includes a harvesting header 22 on its front end that delivers collected crop materials to a feeder house 24 where they are moved upwardly and rearwardly by a conveyor until reaching a beater. The beater feeds the material upwardly and rearwardly to a to a rotor having an infeed auger on the front end thereof. The auger, in turn, advances the materials to thresher and separator mechanisms which thresh the crop to separate the grain therefrom and then eject straw residue either directly onto the ground in a windrow or via a straw chopper. As the construction and operation of a combine harvester 10 are known, further discussion of the same is omitted here for brevity.

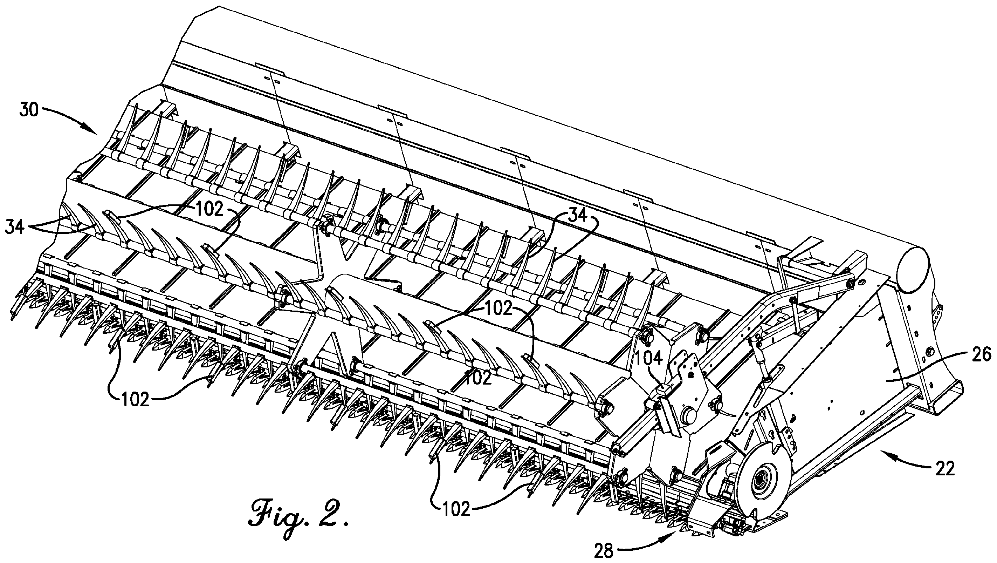

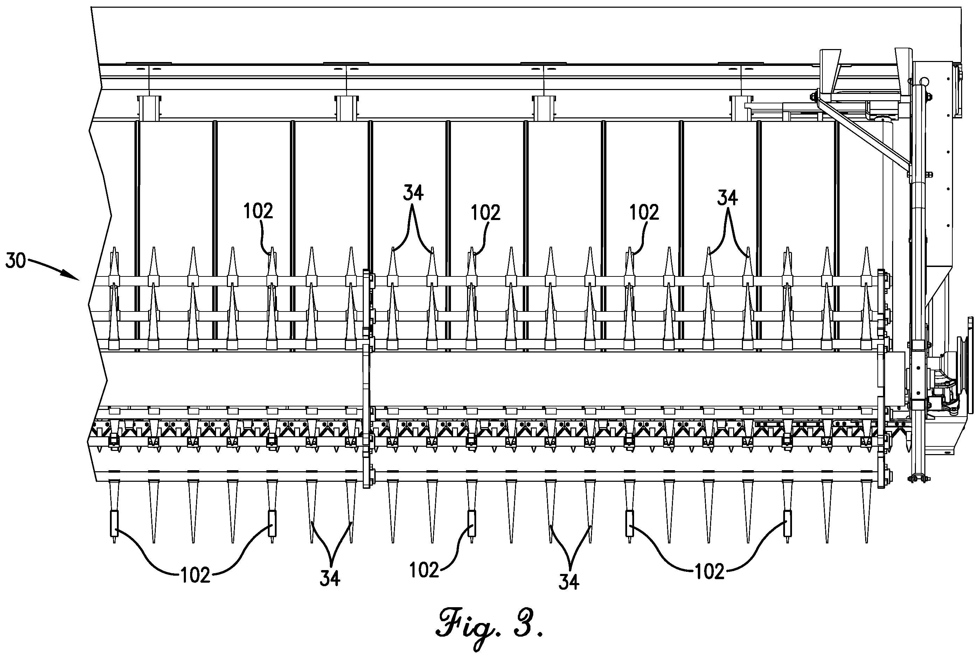

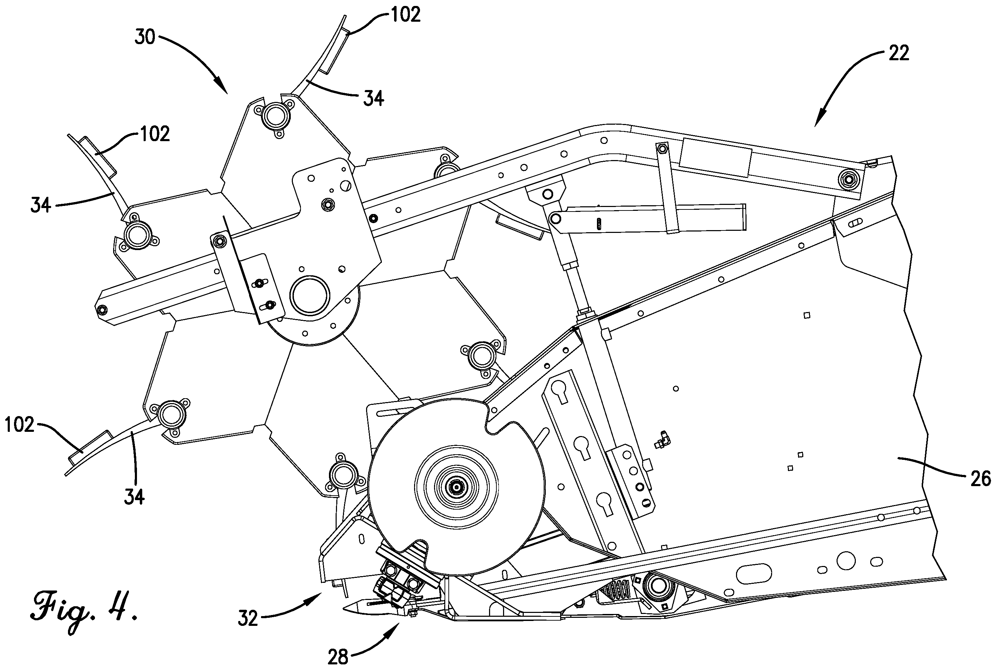

Specifics of the header 22 important to embodiments of the invention will now be discussed in more detail with reference to Figs 2-4. The exemplary header 22 includes a header frame 26 that is suitably supported and attached on the combine such that the header can be moved forwardly across the ground to cut a standing crop. The frame carries a cutting mechanism 28, a rotatable reel 30, and an auger 32 that together cut and gather crop. The cutting mechanism, often a sickle bar or a disc cutter, slices through the crop at the desired height.

The reel 30 has a plurality of rotatable tines 34 or fingers to guide the standing crop into the header. In some embodiments, the reel has a plurality of independently movable reel sections, each with a plurality of rotatable tines. Two such independently movable reel sections 30A, 30B are shown in Fig. 1, but the machine may have any number of reel sections. Each reel section can be rotated, raised, lowered, and otherwise operated independently of the other reel sections and/or operated in unison with the other reel sections.

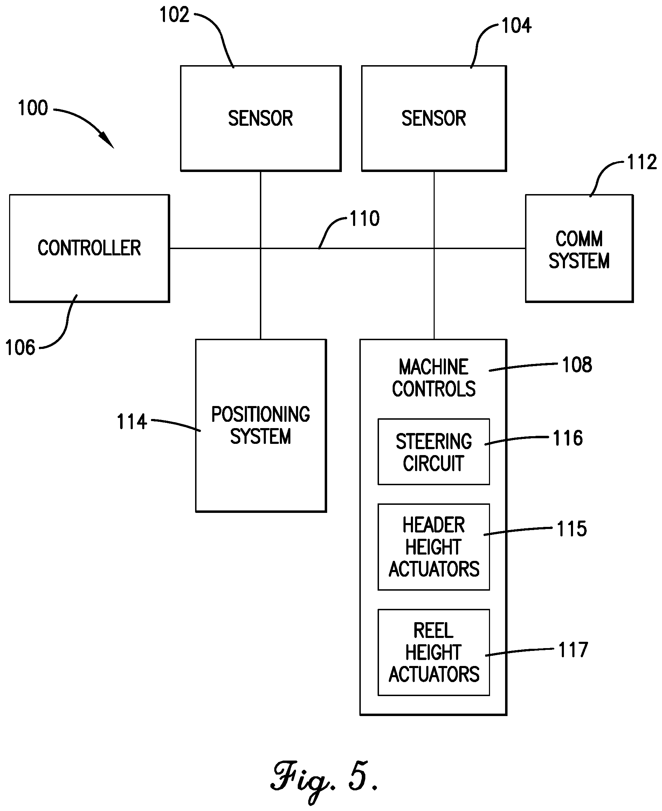

The combine harvester 10 may also be equipped with a header height control system to adjust the header's height above the ground. The header height control system includes conventional sensors, actuators, and controls that are well known and therefore not described in detail herein. The header height control system can be adjusted manually or automatically. For example, it may operate to sense ground surfaces directly in front of the combine harvester's path of travel and automatically position the header a preselected distance above the ground surface so as to follow bumps, ridges, and other contours of the ground surface and to cut crops at about the same distance above these ground surfaces. Components of the header height control system are represented in the machine controls 112 shown in Fig. 5 and discussed more below.

In accordance with aspects of the present invention, the combine harvester is also be equipped with a reel height control system to adjust the reel's height relative to the remainder of the header reel. The reel height control system detects the height of crop to be harvested by the harvester and adjusts the height of the reel so as to follow the height of the crop canopy in front of the harvester and not just follow the height of the header. Components of the reel height control system are also represented in the machine controls 112.

An embodiment of the reel height control system 100 is shown in Fig 5. and comprises a plurality of sensors 102, 104, a controller 106, machine controls 108, and a network 110 for transferring signals from the sensors 102, 104 to the controller 106 and from the controller 106 to the machine controls 108. Data and signals may also be transferred from the controller 106 to other control components on the combine harvester such as a communication system 112 and a positioning system 114. The reel height control system 100 illustrated and described herein is merely illustrative of one embodiment among others. Some embodiments of the invention may include additional control devices or features or fewer or different control devices or features. Moreover, components of the reel height control system 100 may also implement the functions of the header height control system.

The sensors 102, 104 may be any devices that can sense crop canopy height in front of the combine harvester. In one embodiment, the sensors include one or more ultrasound sensors, lidar sensors, radar sensors, or combinations of these sensors. These sensors may be mounted on top of the cab as depicted in Fig. 1 or anywhere else on the harvester that provides a sensor field of view in front of the harvester. The sensors gather distance measurements to solid surfaces, including crop canopies and ground surfaces, in front of the harvester and provide corresponding data to the controller and/or other processing circuits which determine the height of the crop canopy in front of the harvester. The outputs of these sensors are provided over the network 110 to the controller 106 in the form of a coordinate system based on incident angle and distance values relative to the sensors. The mounting angle of the sensors on the combine harvester and the pitch of the combine harvester 10 influence how these values translate into a plane coordinate system in front of the combine harvester 10. More details of these types of sensors and their operation are described in U.S. Patent No. 10,670,708, which is incorporated herein by reference in its entirety.

In other embodiments, the sensors 102, 104 may be contact sensors that detect physical contact between the reel and a crop being harvested by the machine and that generate corresponding crop contact signals. The contact sensors detect physical contact with a crop being harvested by the machine and generate corresponding crop contact signals. The contact sensors may be mounted on any part of the machine.

In one embodiment shown in Figs 2-4, contact sensors 102 are shown mounted to some of the rotatable tines 34 of the reel 30 to detect deflection of the tines caused by contact with the crop. In embodiments of the combine with several independently movable reel sections, at least one of the contact sensors 102 is mounted to at least one tine on each of the independently movable reel sections so the sensors detect physical contact with the crop in front of all of the reel sections. For example, if the reel has six independently moveable reel sections, at least six contact sensors 102 are installed on the machine, with at least one contact sensor mounted on one of the tines of each reel section. In some embodiments, a contact sensor is mounted to more than one tine in each reel section for greater resolution. In some embodiments, contact sensors 102 are mounted on every tine of the reel.

The contact sensors 102 may employ any sensor technologies that can detect physical contract with crops in front of the harvester. In one embodiment, the contact sensors are hall effect tactile sensors such as the flexible hall effect tactile sensors provided by Reichardt Elektronik GmbH.

Because the tines 34 on which the contact sensors 102 are mounted rotate about the axis of the reel, the rotational positions of the sensors 102 when they first contract the crop canopy must be detected in order to detect the height of the crop canopy. Thus, in embodiments in which the contact sensors are mounted to the rotatable tines, the system also comprises at least one position sensor 104 shown in Fig. 2 mounted on the header near the central axis of the reel. The position sensor 104 may be an optical position sensor that senses angular positions of the contact sensors 102 when the contact sensors 102 detect physical contact with the crop and that generates corresponding angular position signals.

The controller 106 receives the sensor signals and determines a canopy height of the crop based on these signals. For example, in embodiments in which the sensors are contact sensors and position sensors, the controller receives the associated crop contact signals and the angular position signals and determines the height of the crop to be harvested based on these signals. Importantly, because the contact sensors detect physical contact with the crop as the crop enters the agricultural machine, they generate signals that are representative of the height of crop immediately in front of the machine. Moreover, because each contact sensor detects contact with a crop at a particular location on the machine, the height of crop in specific and different areas in front of the machine can be detected.

Once the controller 106 has determined the height of the crop, it sends instructions to the machine controls 108 to position the reel to follow the crop height. For example, in one embodiment, the controller may be programmed to position the center axis of the reel a specified distance, such as 1 foot above or below the detected height of the crop. As the agricultural machine moves through crop in a field, the sensors 102, 104 and controller 106 continuously detect the height of crop in front of the machine and provide instructions to the machine controls 108 to adjust the height of the reel to follow the height of the crop. In embodiments in which the machine has several independently moveable reel sections, each reel section may be raised or lowered to follow the height of crop directly in front of it.

The machine controls 108 collectively represent the various actuators, sensors, motors, and/or controlled devices residing on the combine harvester 10 to raise, lower, or otherwise position the header and the reel and to enable navigational or operational functionality of the combine. For example, as shown, the machine controls include the actuators, motors, pumps, or other devices 115 that raise and lower the header. The machine controls also include the actuators, motors, pumps, or other devices 117 that raise and lower the reel relative to the header. The machine controls 112 may further include a steering circuit 116, which includes hydraulic pumps, motors, control valves, etc. for enabling automatic/guided or manual steering of the combine harvester 10. For guided steering, the control software may be implemented in the controller 104 or remotely.

The data exchange network 110 transfers signals from the sensors 102, 104 to the controller 106 and transfers data and signals from the controller 106 to the machine controls 108. The network 110 also transfers data and signals from and to other control components on the combine harvester such as the communication system 112, positioning system 114, and/or other devices. The network 110 may be a CAN network or any other network or data transmission path.

The communication system 112 transmits data to, and receives data from, one or more devices located external to the combine harvester 10. For instance, the communication system 112 may transmit data generated by the sensors 102, 104 to a remote server, the remote server comprising functionality of the controller 106. In some embodiments, the communication system 112 may access, from remote storage, topology maps or other maps or data that may be useful to the guidance of the combine harvester 10 across the field and/or the accuracy of detecting the height of the crop canopy. The communication system may comprise any known communications equipment such a radio and/or cellular transceiver or modem.

The positioning system 114 may include a global navigation satellite system (GNSS) receiver, a global positioning system or GPS, geographic information system (GIS), etc. and enables the detection of a geofence or mapped areas, as well the detection of vehicle positioning, speed, and/or location of the combine harvester 10. Other components such as a user interface may also exchange data with other components via the network 108.

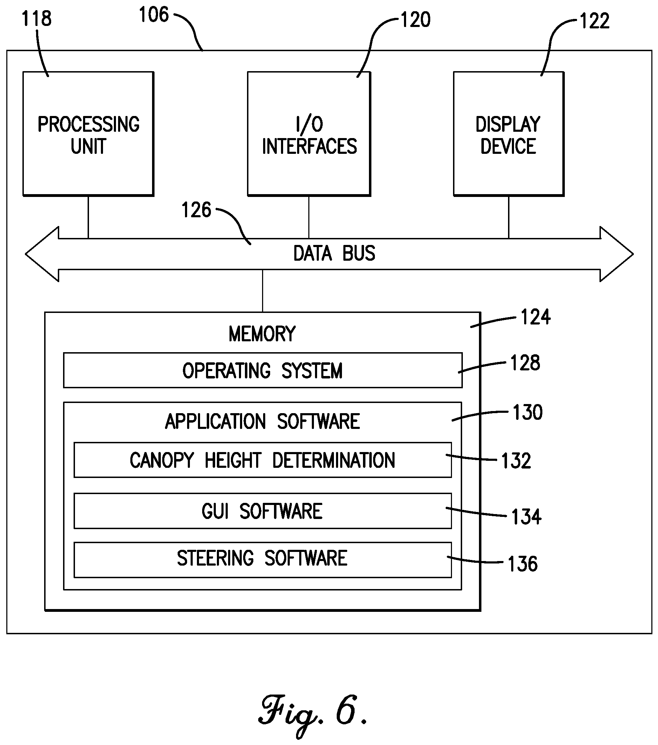

Fig. 6 illustrates an exemplary embodiment of the controller 106. The illustrated controller 106 is just one example of a device that may implement aspects of the present invention and may be replaced with another device and/or may have fewer or additional components than those illustrated. Moreover, some of the functionality associated with the various components depicted in Fig. 6 may be combined or distributed among additional modules or devices.

The controller 106 may comprise any processing device or circuitry such as a processing unit 118, which may be a processor or any other logic device. The controller may also comprise input/output (I/O) interface(s) 120, a display device 122, and memory 124, all coupled to one or more data busses, such as data bus 126.

The memory 124 may include any one or a combination of volatile memory elements (e.g., random-access memory RAM, such as DRAM, and SRAM, etc.) and nonvolatile memory elements (e.g., ROM, hard drive, tape, CDROM, etc.). The memory 124 may store a native operating system 128 and one or more native applications, emulation systems, or emulated applications for any of a variety of operating systems and/or emulated hardware platforms, emulated operating systems, etc. In the embodiment depicted in Fig 6, the memory 124 stores or otherwise accesses the operating system 128 and application software 130.

The application software 130 comprises, in one embodiment, crop canopy height determination software 132, graphical user interface (GUI) software 134, and steering software 136. In some embodiments, functionality of one or more of these software modules may be combined into a single software module, or further distributed according to additional modules in the memory 124 or other memory. In some embodiments, functionality for one or more of the software modules may be stored remotely. In some embodiments, a separate storage device (e.g., a non-transitory, computer readable storage medium) may be coupled to the data bus 126 (or the network 108), such as a persistent memory (e.g., optical, magnetic, and/or semiconductor memory and associated drives).

The crop canopy height determination software 132 receives data from the sensors 102, 104 and determines the height of the crop canopy in front of the combine based on the received signals. The software 132 or similar software then determines how to position the reel to follow the height of the crop signals. The software may use any known algorithms for performing these calculations. For example, in one embodiment, the software monitors the sensor signals from the contact sensors 102 and the position sensor 104. When multiple contact sensors across the length of the reel detect contact with crop, the software determines the angle of the sensors from a reference horizontal plane from sensor signals received from the position sensor to determine the height of the sensors and thus the height of the crop.

In some embodiments, the steering software 136 receives the crop canopy height data and other data and provides steering commands to the machine controls 112.

The GUI software 134 provides feedback, alerts, and/or recommendations to an operator based on data received from the network 108 and/or from the software modules of the application software 130.

Execution of the software modules is implemented by the processing unit 118 under the management of the operating system 128. In some embodiments, the operating system 128 may be omitted and a more rudimentary manner of control implemented. The processing unit 118 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the controller 106.

The I/O interfaces 120 provide one or more interfaces to the network 110, as well as interfaces for access to one or more computer readable mediums, such as memory drives, which includes an optical, magnetic, or semiconductor-based drive. The I/O interfaces 120 may comprise any number of interfaces for the input and output of signals (e.g., analog or digital data) for conveyance over the network 110. The input may comprise input by an operator (local or remote) through a keyboard or mouse or other input device (or audible input in some embodiments), and input from signals carrying information from one or more of the components of the control system 100.

The display device 122 comprises one of a variety of types of displays, including liquid crystal diode (LCD), plasma, among others, that provide an outputted GUI to the operator as indicated above. In some embodiments, the display device 122 may be a headset-type display with or without an audio component. In some embodiments, the display device 122 may be accessed by the processing unit 118 via the network 110.

When certain embodiments of the controller 106 are implemented at least in part as software (including firmware), the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiment of the controller 106 are implemented at least in part as hardware, such functionality may be implemented with any or a combination of the following technologies, which are all well-known in the art: a discreet logic circuit(s) having logic gates for implementing logic functions upon data signals, an application specific integrated circuit (ASIC) having appropriate combinational logic gates, a programmable gate array(s) (PGA), a field programmable gate array (FPGA), etc.

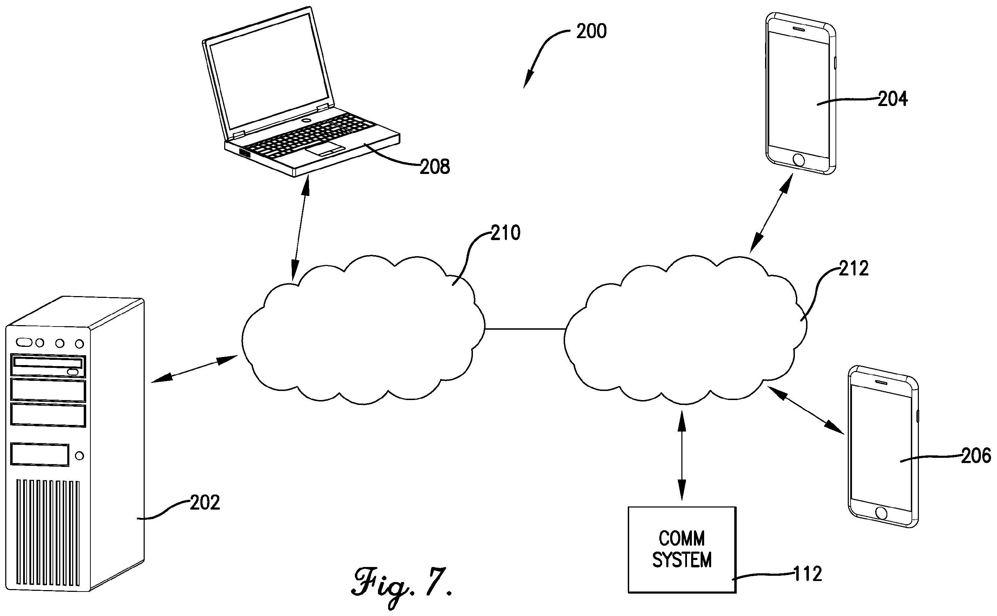

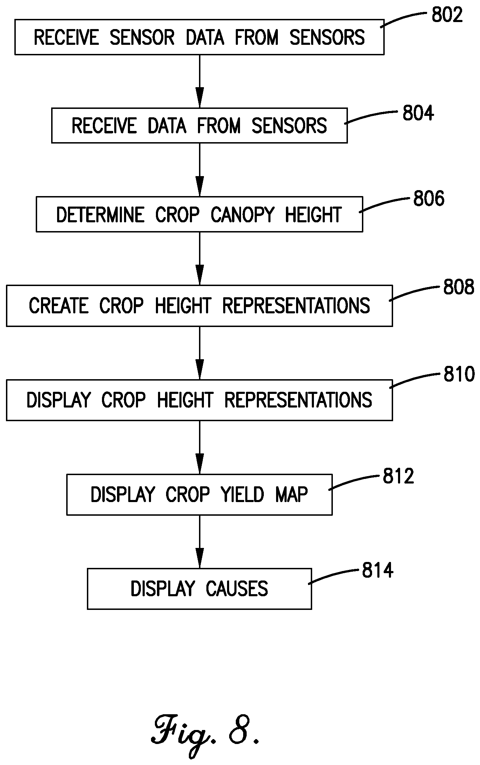

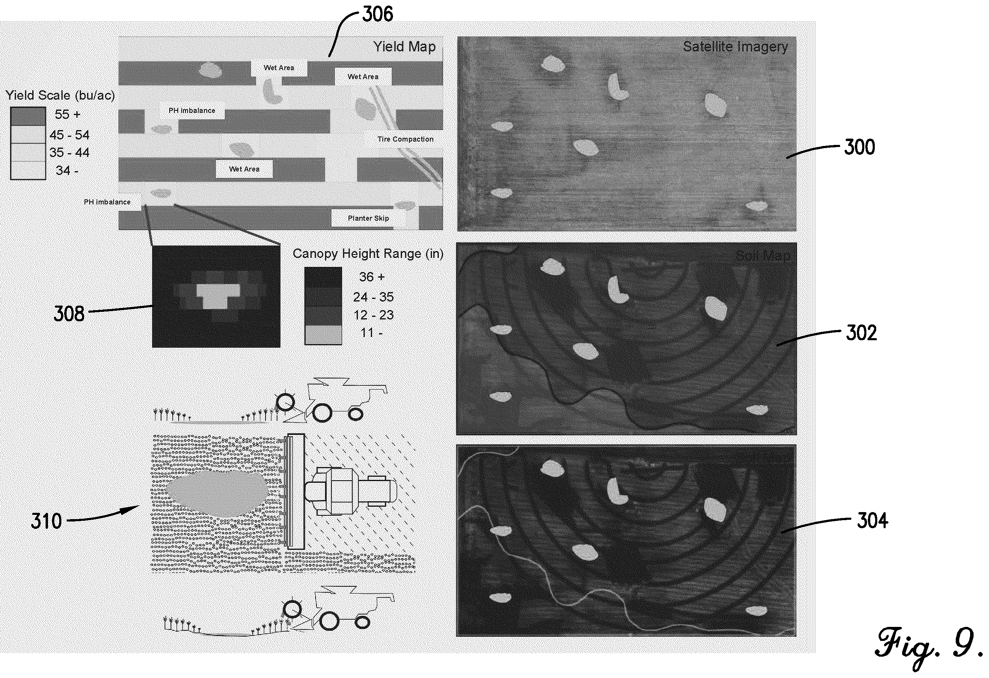

One or more of the process descriptions or blocks in the flow diagram of Fig. 7 should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

Each software module may comprise an ordered listing of executable instructions for implementing logical functions and can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any means that can contain, store, communicate, propagate or transport the program for use by or in connection with the instruction execution system, apparatus, or device including, but not limited to, the memory 124.

Some or all of the components of the system 100 may be enclosed in or supported on a weatherproof housing for protection from moisture, vibration, and impact. The housing may be positioned anywhere on the combine and may be constructed from a suitable vibration and impact-resistant material such as, for example, plastic, nylon, aluminum, or any combination thereof and may include one or more appropriate gaskets or seals to make it substantially waterproof or resistant.

The flow chart of Fig. 7 shows the functionality and operation of an exemplary implementation of the present invention in more detail. In this regard, some of the blocks of the flow chart may represent method steps and/or a module segment or portion of code of the computer programs of the present invention which comprises one or more executable instructions for implementing the specified logical function or functions. In some alternative implementations, the functions noted in the various blocks may occur out of the order depicted in Fig. 7. For example, two blocks shown in succession in Fig. 7 may in fact be executed substantially concurrently, or the blocks may sometimes be executed in the reverse order depending upon the functionality involved.

As shown in block 702, the controller 106 receives sensor data from the sensors 102, 104 while the agricultural machine is operating. As shown in block 704, the controller may also receive data from other sensors or devices such as the positioning system. Then, as depicted in block 706, the controller 106 calculates the height of the crop canopy based on the sensor data and any other received data. Next, as depicted by step 708, the controller 106 sends control signals and/or other instructions to the machine controls 108 to instruct the machine controls to raise or lower the reel to follow the crop height. For example, in one embodiment, the controller may be programmed to position the center axis of the reel a specified distance above or below the detected height of the crop. As the agricultural machine moves through crop in a field, these steps are continuously or periodically repeated. In some embodiments of the invention, the controller may also send data to other components of the harvester to display the detected crop canopy height and/or use the detected crop canopy height to control other functions of the agricultural machine such as raising or lowering the header.

### ADDITIONAL CONSIDERATIONS

The detailed description of the technology references the accompanying drawings that illustrate specific embodiments in which the technology can be practiced. The embodiments are intended to describe aspects of the technology in sufficient detail to enable those skilled in the art to practice the technology. Other embodiments can be utilized, and changes can be made without departing from the scope of the current invention. The detailed description is, therefore, not to be taken in a limiting sense. The scope of the current invention is defined only by the appended claims, along with the full scope of equivalents to which such claims are entitled.

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processing element, may be implemented as special purpose or as general purpose. For example, the processing element may comprise dedicated circuitry or logic that is permanently configured, such as an application-specific integrated circuit (ASIC), or indefinitely configured, such as an FPGA, to perform certain operations. The processing element may also comprise programmable logic or circuitry (e.g., as encompassed within a general-purpose processor or other programmable processor) that is temporarily configured by software to perform certain operations. It will be appreciated that the decision to implement the processing element as special purpose, in dedicated and permanently configured circuitry, or as general purpose (e.g., configured by software) may be driven by cost and time considerations.

Accordingly, the terms "processing unit", "processing element", or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing element is temporarily configured (e.g., programmed), each of the processing elements need not be configured or instantiated at any one instance in time. For example, where the processing element comprises a general-purpose processor configured using software, the general-purpose processor may be configured as respective different processing elements at different times. Software may accordingly configure the processing element to constitute a particular hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed and substitutions made herein without departing from the scope of the technology as recited in the claims.

Having thus described various embodiments of the technology, what is claimed as new and desired to be protected by Letters Patent includes the following:

## Claims

1. A reel height control system for adjusting a height of a reel of an agricultural machine, the reel height control system comprising:
a sensor for sensing a crop to be harvested by the agricultural machine and generating corresponding sensor signals;
machine controls for raising or lowering the reel; and
a processing unit for receiving the sensor signals from the sensor, determining a height of the crop based on the sensor signals, and controlling the machine controls to position the reel to follow the height of the crop.

2. The reel height control system of claim 1, wherein the sensor is selected from the group consisting of a radar sensor, a lidar sensor, and an ultrasonic sensor.

3. The reel height control system of claim 1, wherein the sensor comprises a plurality of contact sensors mounted to the machine, each contact sensor operable to detect physical contact with the crop to be harvested by the machine and to generate a corresponding crop contact signal.

4. The reel height control system of claim 3, wherein the agricultural machine is a combine having a rotatable reel with a plurality of rotatable tines, and wherein the contact sensors are mounted to some of the rotatable tines.

5. The reel height control system of claim 4, wherein the contact sensors are hall effect tactile sensors.

6. The reel height control system of claim 4, wherein the contact sensors detect deflection of the rotatable tines caused by contact with the crop.

7. The reel height control system of claim 4, further comprising a position sensor that senses angular positions of the contact sensors when they detect physical contact with the crop and that generates corresponding angular position signals.

8. The reel height control system of claim 7, wherein the processing unit receives the angular position signals from the position sensor and determines the canopy height of the crop based on the crop contact signals and the angular position signals.

9. The reel height control system of claim 3, wherein the rotatable reel has a plurality of independently movable reel sections each with a plurality of rotatable tines, and wherein at least one of the contact sensors is mounted to each of the independently movable reel sections to detect physical contact with the crop in front of each of the reel sections.

10. A combine harvester for harvesting a crop, the combine harvester comprising:
a wheeled frame having a front end;
a cutting header positioned on the front end for cutting the crop, the cutting header comprising:
a cutting element; and
a rotatable reel having a plurality of rotatable tines for controlling movement of the crop toward the cutting element;
a threshing mechanism that receives cut crop from the cutting header and separates grain from the cut crop;
a grain holder for holding the grain; and
a reel height control system comprising:
a plurality of sensors mounted to the machine and operable to sense a height of crop in front of the harvester and generate sensor signals;
machine controls for raising or lowering the reel relative to the cutting element; and
a processing unit that receives the sensor signals from the sensors, determines a height of the crop based on the sensor signals, and instructs the machine controls to position the reel to follow the height of the crop.

11. The combine harvester as set forth in claim 10, wherein the sensors are contact sensors mounted to some of the rotatable tines of the reel.

12. The combine harvester crop as set forth in claim 11, wherein the contact sensors detect deflection of the rotatable tines caused by contact with the crop.

13. The combine harvester as set forth in claim 12, wherein the sensors further include position sensors that sense angular positions of the contact sensors and generate corresponding angular position signals, wherein the processing unit determines the canopy height of the crop based on the crop contact signals and the angular position signals.

14. The combine harvester as set forth in claim 13, wherein the position sensor is an optical position sensor mounted to a non-rotating component of the agricultural machine.

15. The combine harvester as set forth in claim 11, wherein the rotatable reel has a plurality of independently movable reel sections each with a plurality of rotatable tines, and wherein at least one of the contact sensors is mounted to each of the independently movable reel sections to detect physical contact with the crop in front of each of the reel sections.
